# EUROPEAN PATENT SPECIFICATION

(11) **EP 0 937 379 B1**
(45) Date of publication and mention of the grant of the patent: **21.05.2003**
(21) Application number: 99301106.3
(22) Date of filing: 16.02.1999
(51) Int. Cl.: A01D 34/71

(54) **Lawnmower**
Rasenmäher
Tondeuse à gazon

(30) Priority: 23.02.1998 GB 9803754
(43) Date of publication of application: 25.08.1999
(73) Proprietor: ELECTROLUX OUTDOOR PRODUCTS LIMITED, Newton Aycliffe, Co Durham DL5 6UP (GB)
(72) Inventor: Bowden, Michael, Newton Aycliffe, Co Durham DL5 4XF (GB); Mattocks, Andrew, Darlington, Co Durham DL2 2LY (GB)
(74) Representative: Wright, Howard Hugh Burnby

(56) References cited:
- EP-A- 0 037 871
- EP-A- 0 457 433
- EP-A- 0 501 674
- DE-A- 1 482 002
- US-A- 4 974 403
- US-A- 5 048 275

## Description

The present invention relates to lawnmowers of the type having a cutter blade rotatable about a substantially vertical axis within a cutter chamber defined by a housing, an air moving device, and a grass collector which includes an inlet for entry of grass cuttings from the ground.

An example of this type of lawnmower is shown in EP-A-0037871, the invention of which has formed the basis for a number of machines which have been put on the market. In EP-A-0037871, an inlet nozzle through which grass cuttings are collected may be placed at any suitable position around the hood. In Figures 1 and 2 of that patent, the nozzle is disposed across the front of the machine so that, as the mower is pushed forward, grass cuttings and debris lying on the ground ahead of the mower are collected. This means that any grass cuttings are left on the ground behind the lawnmower to be picked up when the mower passes over that ground again, thereby necessitating two passes over that part of the lawn. The embodiment shown in Figure 3 of that patent is much more satisfactory since, as the mower is pushed forward, the nozzle is disposed in a concentrated area at the rear at the position at which a windrow of grass cuttings is formed.

One characteristic of the embodiment shown in Figure 3 of EP-A-0037871 is that grass cuttings are only collected from the one concentrated area. If the mower is not pushed forward in a straight line, the grass cuttings will not pass into the region of the nozzle, and so no grass cuttings will be collected.

One disadvantage of hover-type lawnmowers is that the pressurised air which escapes from beneath the housing tends to entrain a small proportion of the grass cuttings which are within the cutter chamber, thereby causing 'spraying' of grass cuttings. The grass cuttings may fall on the user's garden path or patio, thereby necessitating sweeping, or in the user's pond.

According to the present invention, a lawnmower comprises a cutter blade rotatable about a substantially vertical axis, a motor for driving the cutter blade, a housing which defines a cutter chamber within which the cutter blade is mounted, the cutter chamber having a periphery, an air moving device, a grass collector which includes an inlet for entry of grass cuttings from the ground, and an outlet through which air is drawn by the air moving device, characterised by a downwardly facing air channel means disposed around a major proportion of the periphery of the cutter chamber and which leads to the inlet. This permits the air moving device to draw air into the grass collector via the air channel means. Air entering the air channel means entrains a substantial proportion of the sprayed grass cuttings, so that they are carried to the receptacle. In addition, if the mower is not pushed forward in a straight line, a proportion of the grass cuttings will be sucked into the channel means. Thus, the lawnmower may reduce spraying, and be more effective at multi-directional collection. The air channel means may comprise one or more air channels.

It is convenient for the air channel means to be disposed outside the cutter chamber around a major proportion of the housing.

The air moving device is preferably arranged to direct air into the cutter chamber partly because any dust in the air will be directed downwards away from the user, and in some embodiments to support the lawnmower above the ground with the high pressure air. A typical construction of the air moving device is an impeller mounted for rotation with the cutter blade.

The housing of most lawnmowers is generally rectangular in plan, and so the channel means are preferably disposed around substantially the whole of the sides and rear of the housing. The channel means may also be disposed across at least a part of the front of the housing. The channel means may lie generally in a plane, which, in use, is substantially parallel to the ground. Alternatively, the plane of the channel means may be inclined upwardly relative to the ground towards the inlet. The channel means may be mainly circular in cross-section, but are preferably generally rectangular in cross-section and may be integral with the housing for achieving a compact design. The rim of the housing advantageously defines not only the sides of the cutter chamber, but also part of the channel means. This reduces the weight and amount of materials required.

The invention will now be described in more detail, by way of example only, with reference to the drawings in which;
Figure 1 is a sectional side view of a lawnmower according to the present invention; and
Figure 2 is a schematic sectional plan view of the lawnmower shown in Figure 1.

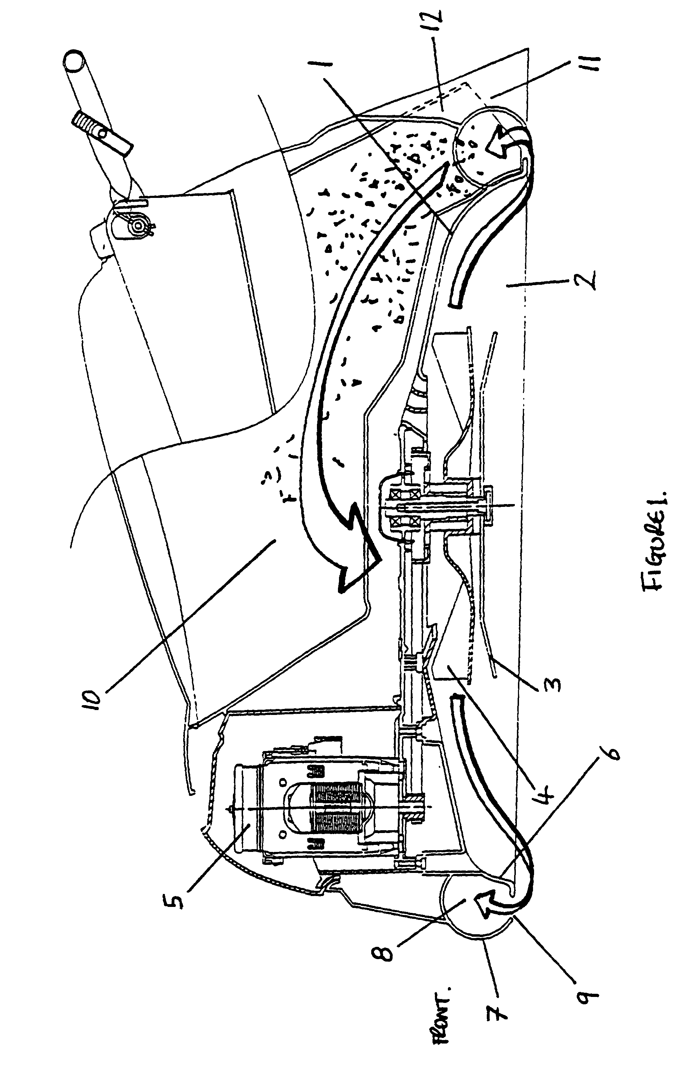

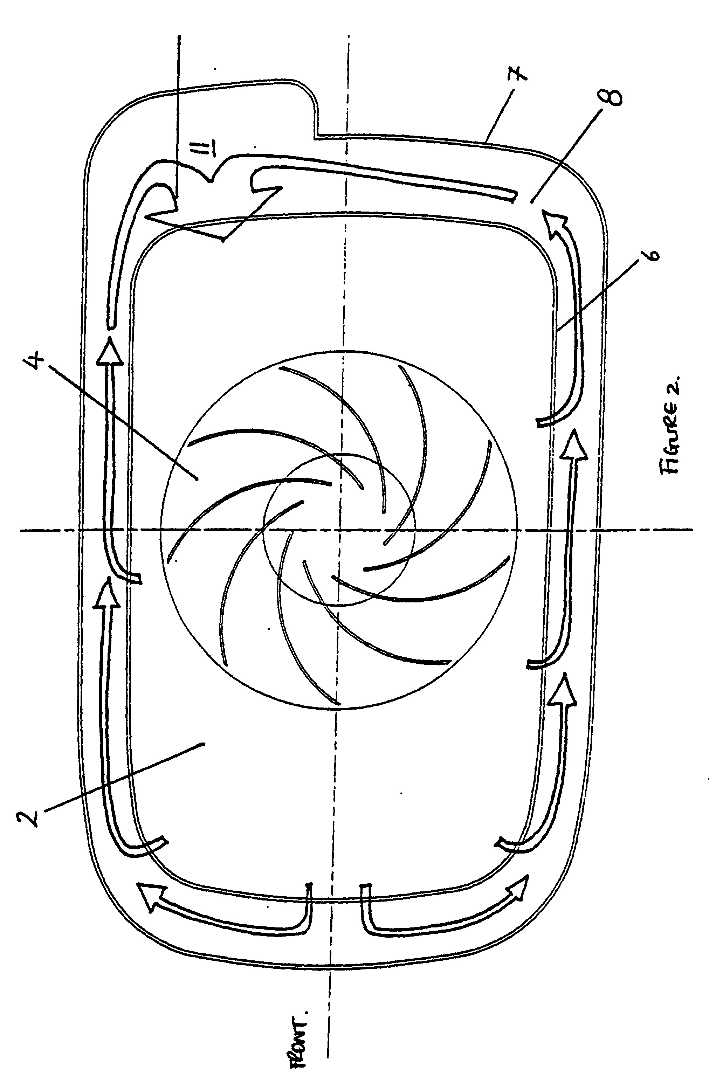

Referring to Figures 1 and 2, a lawnmower is shown including a housing or platform 1 which defines a cutter chamber 2 within which a cutter blade 3 is mounted for rotation about a substantially vertical axis. The housing 1 is sometimes referred to as a hood, and is shaped as an upturned dish as is well-known in the field of lawnmowers.

Also mounted for rotation with the cutter blade 3 is a fan 4, which is a multi-bladed impeller. The cutter blade 3 and fan 4 are driven about the substantially vertical axis by a motor 5, which is normally an electric motor, but may be an internal combustion engine. In this embodiment, the motor 5 is disposed at the front of the lawnmower and drives the cutter blade 3 and fan 4 through an indirect drive system. The positioning of the motor 5 at the front of the machine permits grass to be collected above the housing 1 of the machine so as to keep the machine compact and well-balanced, the grass cuttings being collected generally above the centre of hover of the lawnmower.

The housing 1 includes a rim 6 which defines the sides, front and rear of the cutter chamber 2. Where the rim 6 meets the ground, it is flared outwardly. In use, the outwardly flared part of the rim is lifted away from the ground.

Just outside the rim 6 of the housing 1 is a wall 7 which extends circumferentially around the whole of the rim. The wall 7 defines a circumferential channel 8 which has a downwardly-facing open slot 9 which also extends right the way around the rim 6. The channel 8 is generally circular in cross-section, except for the part of the channel which is constituted by the rim 6. The wall 7 is preferably integral with the housing 1 and may be moulded together with it. However, the channel 8 is located outside the cutter chamber 2. The channel 8 lies generally parallel to the ground.

A grass collector 10 is disposed on the housing 1 generally above the cutter chamber 2. Thus, as the grass collector 10 fills with grass, the mower remains stable. The grass collector 10 includes an inlet 11 which leads into a rear chute 12 through which cut grass passes into the grass collector. The inlet 11 is disposed at the rear of the machine above the position at which a windrow of grass cuttings is formed by the lawnmower as it is pushed forward in normal use. The grass collector 10 includes an outlet (not shown) which leads to the fan 4. The outlet of the grass collector 10 is normally permeable to air, but impermeable to grass cuttings.

In operation, the motor 5 drives the cutter blade 3 and the fan 4 about the substantially vertical axis. As the lawnmower is moved across a lawn, the cutter blade 3 acts to cut the grass, and the fan 4 directs air under pressure into the cutter chamber 2 so as to support the lawnmower on a cushion of pressurised air. As the lawnmower is lifted on the air, air leaks out from beneath the rim 6 of the housing 1. As it does so, it entrains a small proportion of the grass cuttings. As the pressurised air passes beneath the rim, much of that air is drawn into the channel 8 via the slot 9. Thus, the grass entrained in this high pressure air tends to enter the channel 8, and since the channel leads to the inlet 11, the channel is at a pressure lower than the pressure of air within the cutter chamber 2. Thus, most of the grass cuttings, which would normally be sprayed by the escape of the pressurised air, are drawn into the channel 8 and carried by the air to the inlet 11 where they are drawn into the grass collector 10 for collection. The channel 8 is arranged so that air and entrained grass cuttings are able to flow through the channel 8 to the inlet 11.

In normal use, where the lawnmower is pushed forward in a straight line, a relatively small amount of grass will be collected through the channel 8. Most of the grass collection will take place in the region of the inlet 11 which is disposed just above where the windrow of cut grass forms and is larger in cross-sectional area than the slot 9 in the channel 8. As the grass is cut by the cutter blade 3, it is thrown to one side, and dropped on the ground. As the lawnmower is pushed forward, the grass cuttings which have been left on the ground emerge from the rear of the lawnmower, in the form of a windrow and are sucked up into the grass collector 10 via the inlet 11. If the lawnmower is not pushed in a straight line, but is pulled backwards, or moved sideways, the windrow will not form beneath inlet 11. However, as the dropped grass cuttings emerge from beneath the housing 1, a substantial proportion of the grass cuttings will be sucked up into the channel 8 via the slot 9. Thus, limited multi-directional grass collection is achieved. The collected grass cuttings pass through the rear chute 12 into the collector 10. The air is sucked from the grass collector 10 by the fan 4 through the outlet.

To enhance the flow of air around the channel 8 towards the inlet 11, a vent might be fitted in the channel 8 at the front of the lawnmower. Thus, ambient air can enter the channel 8 so as to improve air flow.

In the above embodiment, the channel means lie in a plane which is substantially parallel with the ground. However, in another embodiment, the channel means are inclined upwardly relative to the ground. The channel means can be inclined upwardly towards the front or rear. If the inlet is at the rear of the machine, the channel means may be inclined upwardly towards the inlet.

Other embodiments are also possible. For example, the channel 8 may not extend circumferentially around the whole of the housing 1. For example, the front of the lawnmower might not include a channel. Alternatively, only part of the front might include the channel, and this may be part of the front of the lawnmower at which a windrow is produced if the lawnmower if moved straight and backwards.

## Claims

1. A lawnmower comprising:
a cutter blade (3) rotatable about a substantially vertical axis;
a motor (5) for driving the cutter blade (3);
a housing (1) which defines a cutter chamber (2) within which the cutter blade (3) is mounted, the cutter chamber (2) having a periphery;
an air moving device (4);
a grass collector (10) which includes an inlet (11) for entry of grass cuttings from the ground, and an outlet through which air is drawn by the air moving device(4); **characterised by** a downwardly-facing air channel means (8) disposed around a major proportion of the periphery of cutter chamber (2), and which leads to the inlet (11).

2. A lawnmower according to claim 1, wherein the air channel means (8) comprises one or more air channels.

3. A lawnmower according to claim 1 or 2, wherein the air moving device (4) is arranged so as to direct air into the cutter chamber (2).

4. A lawnmower according to claim 3, wherein the lawnmower is a hover-type lawnmower which, in use, is supported above the ground by high pressure air directed into the cutter chamber (2) by the air moving device (4).

5. A lawnmower according to any one of claims 1 to 4, wherein the air moving device is an air impeller (4) mounted for rotation with the cutter blade (3).

6. A lawnmower according to any one of claims 1 to 5, wherein the channel means (8) are arranged to lead air around the periphery of the cutter chamber (2) to the inlet (11).

7. A lawnmower according to claim 6, wherein the inlet (11) is, in use, disposed adjacent to, and generally facing, the ground.

8. A lawnmower according to any one of claims 1 to 7, wherein the air channel means (8) is disposed outside the cutter chamber (2) around a major proportion of the housing (1).

9. A lawnmower according to any one of the preceding claims, wherein the channel means (8) lie generally in a plane, which, in use, is substantially parallel with the ground.

10. A lawnmower according to any one of claims 1 to 8, wherein the plane of the channel means (8) is inclined relative to the ground.

11. A lawnmower according to claim 10, wherein the channel means (8) are inclined upwardly towards the inlet (11).

12. A lawnmower according to any one of the preceding claims, wherein the housing (1) is generally rectangular, and the channel means (8) is disposed around substantially the whole of the sides and rear of the housing (1).

13. A lawnmower according to any one of the preceding claims, wherein the channel means (8) extends across at least a portion of the front of the housing (1).

14. A lawnmower according to any one of the preceding claims, wherein the channel means (8) is generally rectangular in cross-section.

15. A lawnmower according to any one of claims 1 to 13, wherein the channel means (8) is mainly circular in cross-section.

16. A lawnmower according to any one of the preceding claims, wherein the channel means (8) is integral with the housing (1).

17. A lawnmower according to claim 14, wherein the housing (1) includes a rim (6) which defines the sides of the cutter chamber (2), and the rim (6) also defines a part of the channel means(8).

18. A lawnmower according to any one of the preceding claims, wherein the air channel means (8) includes a vent to allow entry of ambient air.

19. A lawnmower according to claim 18, wherein the vent is located in the air channel means remote from the inlet (11).

## Patentansprüche

1. Rasenmäher enthaltend:
ein Fräsermesser (3), welches um eine im wesentlichen vertikale Achse rotierbar ist;
einen Motor (5) zum Antreiben des Fräsermessers (3);
ein Gehäuse (1), welches eine Messerkammer (2) definiert, innerhalb der das Fräsermesser (3) montiert ist, wobei die Messerkammer (2) eine Peripherie aufweist;
eine Gebläsevorrichtung (4);
einen Grasssammler (10), der einen Einlass (11) zum Einführen von vom Boden abgeschnittenen Grassteilen und einen Auslass, durch den Luft von der Gebläsevorrichtung (4) abgesaugt wird, einschließt;
**gekennzeichnet durch** ein nach unten zeigendes Luftkanalmittel (8), welches um einen Hauptteil der Peripherie der Messerkammer (2) angeordnet ist und welches zu dem Einlass (11) führt.

2. Rasenmäher gemäß Anspruch 1, bei dem das Luftkanalmittel (8) einen oder mehrere Luftkanäle enthält.

3. Rasenmäher gemäß Anspruch 1 oder 2, bei dem die Gebläsevorrichtung (4) derart angeordnet ist, um Luft in die Messerkammer (2) zu leiten.

4. Rasenmäher gemäß Anspruch 3, bei dem der Rasenmäher ein Schwebe-Rasenmähertyp ist, der im Gebrauch durch Hochdruckluft, welche mittels der Gebläsevorrichtung (4) in die Messerkammer (2) geleitet wird, über dem Boden gehalten wird.

5. Rasenmäher gemäß einem der Ansprüche 1 bis 4, bei dem die Gebläsevorrichtung ein Luft getriebenes Laufrad (4) ist, das zur Drehung an dem Fräsermesser (3) befestigt ist.

6. Rasenmäher gemäß einem der Ansprüche 1 bis 5, bei dem die Kanalmittel (8) so angeordnet sind, um Luft um die Peripherie der Messerkammer (2) zu dem Einlass (11) zu führen.

7. Rasenmäher gemäß Anspruch 6, bei dem der Einlass (11) im Betrieb angrenzend zum und im allgemeinen auf den Boden gerichtet angeordnet ist.

8. Rasenmäher gemäß einem der Ansprüche 1 bis 7, bei das Luftkanalmittel (8) außerhalb der Messerkammer (2) um einen Hauptteil des Gehäuses (1) angeordnet ist.

9. Rasenmäher gemäß einem der vorhergehenden Ansprüche, bei dem das Kanalmittel (8) im allgemeinen in einer Ebene liegt, welche im Betrieb im wesentlichen parallel zu dem Boden angeordnet ist.

10. Rasenmäher gemäß einem der Ansprüche 1 bis 8, bei dem die Ebene des Kanalmittel (8) relativ zu dem Boden geneigt ist.

11. Rasenmäher gemäß Anspruch 10, bei dem die Kanalmittel (8) nach oben zum Einlass (11) hin geneigt sind.

12. Rasenmäher gemäß einem der vorhergehenden Ansprüche, bei dem das Gehäuse (1) im allgemeinen rechtwinklig ist, wobei das Kanalmittel (8) um im wesentlichen alle Seiten und die Rückseite des Gehäuses (1) angeordnet ist.

13. Rasenmäher gemäß einem der vorhergehenden Ansprüche, bei dem das Kanalmittel (8) sich quer über zumindest einen Teil der Vorderseite des Gehäuses (1) erstreckt.

14. Rasenmäher gemäß einem der vorhergehenden Ansprüche, bei dem das Kanalmittel (8) einen im allgemeinen rechtwinkligen Querschnitt aufweist.

15. Rasenmäher gemäß einem der Ansprüche 1 bis 13, bei dem das Kanalmittel (8) einen hauptsächlich kreisförmigen Querschnitt aufweist.

16. Rasenmäher gemäß einem der vorhergehenden Ansprüche, bei dem das Kanalmittel (8) einteilig mit dem Gehäuse (1) ausgebildet ist.

17. Rasenmäher gemäß Anspruch 14, bei dem das Gehäuse (1) einen Rand (6) aufweist, welcher die Seiten der Messerkammer (2) definiert, wobei der Rand (6) auch einen Teil des Kanalmittel (8) definiert.

18. Rasenmäher gemäß einem der vorhergehenden Ansprüche, bei dem das Luftkanalmittel (8) ein Luftloch einschließt, um den Eintritt von Umgebungsluft zu ermöglichen.

19. Rasenmäher gemäß Anspruch 18, bei dem sich das Luftloch in dem Luftkanalmittel (8) entfernt zum Einlass (11) befindet.

## Revendications

1. Tondeuse à gazon comprenant :
une lame de coupe (3) qui peut tourner autour d'un axe sensiblement vertical ;
un moteur (5) pour entraîner la lame de coupe (3) ;
un carter (1) qui définit une chambre de coupe (2) à l'intérieur de laquelle la lame de coupe (3) est montée, la chambre de coupe (2) ayant une périphérie ;
un dispositif de déplacement d'air (4) ;
un collecteur d'herbe (10) qui comporte une entrée (11) pour l'entrée de l'herbe coupée ramassée sur le sol, et une sortie à travers laquelle l'air est aspiré par le dispositif de déplacement d'air (4) ;
**caractérisée par** un dispositif de canal d'air faisant face vers le bas (8), disposé autour d'une majeure partie de la périphérie de la chambre de coupe (2) et conduisant à l'entrée (11).

2. Tondeuse à gazon selon la revendication 1, dans laquelle le dispositif de canal d'air (8) comprend un ou plusieurs canaux d'air.

3. Tondeuse à gazon selon la revendication 1 ou 2, dans laquelle le dispositif de déplacement d'air (4) est agencé de façon à diriger l'air vers la chambre de coupe (2).

4. Tondeuse à gazon selon la revendication 3, dans laquelle la tondeuse est une tondeuse du type à coussin d'air qui est supportée, en utilisation, au-dessus du sol par de l'air sous forte pression introduit dans la chambre de coupe (2) par le dispositif de déplacement d'air (4).

5. Tondeuse à gazon selon une quelconque des revendications 1 à 4, dans laquelle le dispositif de déplacement d'air est une roue de ventilateur (4) montée pour rotation avec la lame de coupe (3).

6. Tondeuse à gazon selon une quelconque des revendications 1 à 5, dans laquelle le dispositif de canal (8) est prévu pour conduire l'air autour de la périphérie de la chambre de coupe (2) jusqu'à l'entrée (11).

7. Tondeuse à gazon selon la revendication 6, dans laquelle l'entrée (11) est située, en utilisation, près du sol et sensiblement face au sol.

8. Tondeuse à gazon selon une quelconque des revendications 1 à 7, dans laquelle le dispositif de canal d'air (8) est situé à l'extérieur de la chambre de coupe (2), autour d'une majeure partie du carter (1).

9. Tondeuse à gazon selon une quelconque des revendications précédentes, dans laquelle le dispositif de canal (8) est placé sensiblement dans un plan qui est sensiblement parallèle au sol en utilisation.

10. Tondeuse à gazon selon une quelconque des revendications 1 à 8, dans laquelle le plan du dispositif de canal (8) est incliné par rapport au sol.

11. Tondeuse à gazon selon la revendication 10, dans laquelle le dispositif de canal (8) est incliné vers le haut, vers l'entrée (11).

12. Tondeuse à gazon selon une quelconque des revendications précédentes, dans laquelle le carter (1) est sensiblement rectangulaire, et le dispositif de canal (8) est prévu autour de sensiblement la totalité des côtés et de l'arrière du carter (1).

13. Tondeuse à gazon selon une quelconque des revendications précédentes, dans laquelle le dispositif de canal (8) s'étend en travers d'au moins une partie de l'avant du carter (1).

14. Tondeuse à gazon selon une quelconque des revendications précédentes, dans laquelle le dispositif de canal (8) est de section transversale sensiblement rectangulaire.

15. Tondeuse à gazon selon une quelconque des revendications 1 à 13, dans laquelle le dispositif de canal (8) est de section transversale principalement circulaire.

16. Tondeuse à gazon une quelconque des revendications précédentes, dans laquelle le dispositif de canal (8) est solidaire du carter (1).

17. Tondeuse à gazon selon la revendication 14, dans laquelle le carter (1) comporte un rebord (6) qui définit les côtés de la chambre de coupe (2), et le rebord (6) définit également une partie du dispositif de canal (8).

18. Tondeuse à gazon selon une quelconque des revendications précédentes, dans laquelle le dispositif de canal d'air (8) comporte un évent pour permettre l'entrée d'air ambiant.

19. Tondeuse à gazon selon la revendication 18, dans laquelle l'évent est placé dans le dispositif de canal d'air à une position éloignée de l'entrée (11).
